# EUROPEAN PATENT SPECIFICATION

(11) **EP 2 784 442 B1**
(45) Date of publication and mention of the grant of the patent: **20.04.2016**
(21) Application number: 14161177.2
(22) Date of filing: 21.03.2014
(51) Int. Cl.: G01C 17/38, G01C 17/28, G01C 25/00

(54) **Azimuth correction method and electronic device therefor**
Azimutkorrekturverfahren und elektronische Vorrichtung hierfür
Procédé de correction d'azimut et son dispositif électronique

(30) Priority: 26.03.2013 KR 20130032110
(43) Date of publication of application: 01.10.2014
(73) Proprietor: Samsung Electronics Co., Ltd., Suwon-si Gyeonggi-do 443-742 (KR)
(72) Inventor: LEE, Kyung-Hee, Gyeonggi-do (KR)
(74) Representative: Jenkins, Richard Gavin

(56) References cited:
- EP-A2- 1 909 065
- US-A- 5 023 799
- US-A1- 2004 020 064

## Description

### TECHNICAL FIELD

Embodiments relates to electronic device and, more particularly, to azimuth correction method and an electronic device thereof.

### BACKGROUND

Recently, mobile phones, Portable Multimedia Players (PMPs), and electronic devices for Personal Digital Assistant (PDA) have come into wide use as necessities of current society. Also, in accordance with development in scientific technology, recently, there is an electronic device which mounts direction guide functions such as a map function, a navigation function, and a compass function. This electronic device searches a direction using a geomagnetic sensor. For example, the geomagnetic sensor may sense the strength and direction of a magnetic field and search a true north direction through an output azimuth.

US patent US5023799 discloses a scheme for compensating for a perturbing effect of an additional magnetic field in a vehicle-mounted navigation system having geomagnetic sensors. Specifically the scheme compensates for the possibility that a vehicle frame may become magnetized over time. If an additional magnetic field is determined to be present, the scheme switches from a "normal mode process" (using a geomagnetic sensor to detect changes in direction relative to azimuth) to a "magnetization mode process" (using a vehicle-mounted gyro sensor to detect changes in direction relative to azimuth). Values calculated in the respective modes are used to re-centre the output of the geomagnetic sensor cancelling the effect of the additional magnetic field.

### SUMMARY OF THE INVENTION

Accordingly, an aspect of the present invention is to provide an azimuth correction method, a mobile phone, and a non-transitory computer readable storage medium according to the appended claims.

### BRIEF DESCRIPTION OF THE DRAWINGS

FIG. 1A is a view illustrating the appearance of an electronic device according to one embodiment of the present invention;
FIG. 1B is a block diagram illustrating configuration of an electronic device according to one embodiment of the present invention;
FIG. 2 is a flowchart illustrating an azimuth correction method according to one embodiment of the present invention;
FIG. 3 is a flowchart illustrating an azimuth correction method according to one embodiment of the present invention;
FIG. 4 is a flowchart illustrating an azimuth correction method according to one embodiment of the present invention;
FIG. 5 illustrates a change in an azimuth of a geomagnetic sensor according to one embodiment of the present invention;
FIGs. 6A and 6B illustrate an azimuth correction method of an electronic device according to one embodiment of the present invention;
FIGs. 7A and 7B illustrate an azimuth correction method of an electronic device according to one embodiment of the present invention;
FIGs. 8A and 8B illustrate an azimuth correction method of an electronic device according to one embodiment of the present invention; and
FIGs. 9A and 9B illustrate an azimuth correction method of an electronic device according to one embodiment of the present invention.

### DESCRIPTION OF EXAMPLE EMBODIMENTS

Various embodiments of the present invention will be described herein below with reference to the accompanying drawings. In the following description, well-known functions or constructions are not described in detail since they would obscure the invention in unnecessary detail.

Terms including ordinals such as the first and the second may be used to describe various components. However, the components are not limited by the terms. The terms are used for the only purpose of distinguishing one component from other components. For example, a second component may be referred to as a first component without getting out of the scope of right of the present invention. Similarly, the first component may be also referred to as the second component without getting out of the scope of right of the present invention.

When it is described that any component is "connected" or "accessed" to another component, it will be understood that the any component may be directly connected or accessed to the another component, but there may be another component between the any component and the another component. On the other hand, when it is described that any component is "directly connected" or "directly accessed" to another component, it will be understood that there is no another component between the any component and the another component.

Terms used in the present application are used to describe a specific embodiment merely. The terms are not used for the purpose of limiting the present invention. A singular expression includes a plural expression unless it has a contextual, clear, and different meaning. Terms such as "include" or "have", etc. in the present application designate that there are characteristics, numbers, steps, operations, elements, components, or combination of them which are described in the present specification. Accordingly, it must be understood that existence or additional possibility of one or more other characteristics, numbers, steps, operations, elements, components, or combination of them is previously excluded.

Hereinafter, a description will be given for various embodiments with reference to attached drawings. Many specific details such as description and attached drawings below are indicated to further provide the overall understanding of the present invention. However, these specific details illustrate to describe various embodiments of the present invention. It is not meant that the present invention is limited by the specific details. And, a detailed description for well-known functions and elements which may unnecessarily confuse a subject matter of the present invention will be omitted.

"Information" used in the present specification may be terms indicating, for example, values, parameters, coefficients, elements, etc. although it is not limited by them.

"Azimuth information" may be used instead of an azimuth. For example, "azimuth information" may include an azimuth angle, an azimuth direction, a change amount of an azimuth angle, or/and a change direction of an azimuth direction.

Also, "motion information" may mean information (e.g., rotation angle, acceleration or angular speed information) related to motion.

Various embodiments of the present invention relates to an azimuth correction method in an electronic device. For example, when a magnetic field is unexpectedly changed, for example, when a magnetic object is located around the electronic device or when a user of the electronic device enters a building with the electronic device, an error of an azimuth is generated because a magnetic field around the electronic device is changed. That is, when this error of the azimuth is generated, the user of the electronic device may not trust a direction guide direction of the electronic device.

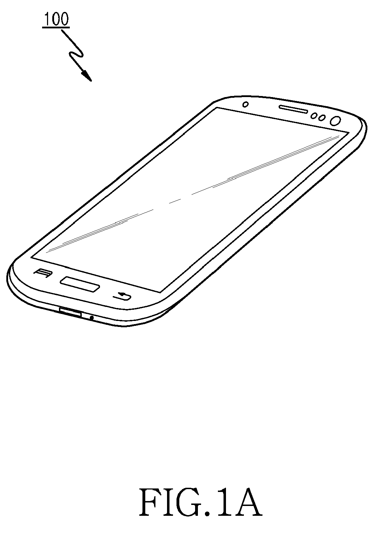

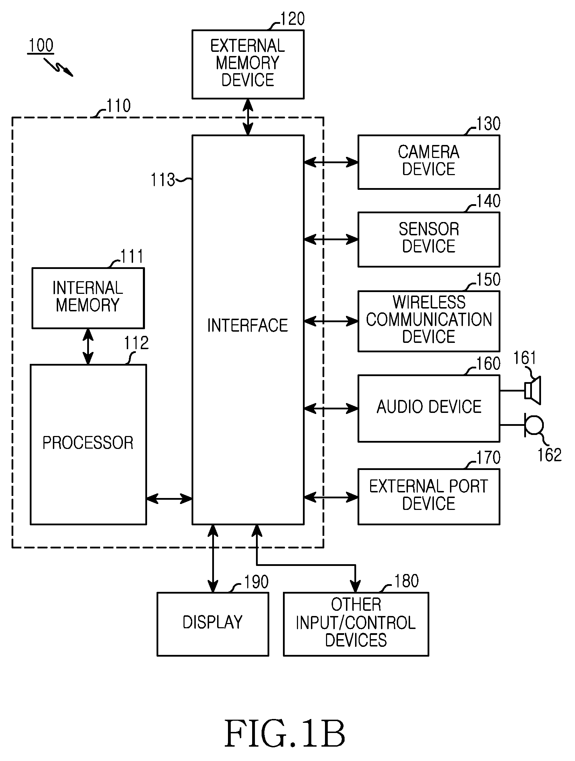

FIG. 1A is a view illustrating the appearance of an electronic device according to one embodiment of the present invention. FIG. 1B is a block diagram illustrating configuration of an electronic device according to one embodiment of the present invention.

Referring to FIGs. 1A and 1B, the electronic device denoted by 100 may be at least one of apparatuses, such as for example a mobile phone, a mobile pad, a media player, a tablet computer, a handheld computer, and a PDA. Also, the electronic device 100 may be a certain electronic device which includes a device in which two or more functions are combined among these apparatuses.

The electronic device 100 may include a host device 110, an external memory device 120, a camera device 130, a sensor device 140, a wireless communication device 150, an audio device 160, an external port device 170, a display 190, and other input/control devices 180. Herein, the external memory device 120 and the external port device 170 may be a plurality of external memory devices and external port devices, respectively.

The host device 110 may include an internal memory 111, one or more processors 112, and an interface 113. The internal memory 111, the one or more processors 112, and the interface 113 may be separately configured or may be configured in one or more Integrated Circuits (ICs).

The processor 112 may execute several software programs and performs several functions for the electronic device 100. The processor 112 can process and control for audio communication, video communication, and data communication. The processor 112 may execute a software program (instruction set), for example, stored in the internal memory 111 and/or the external memory device 120, and perform several functions corresponding to the software program. That is, the processor 112 may interwork with software programs, for example, stored in the internal memory 111 and/or the external memory device 150, and perform various embodiments of the present invention.

The processor 112 may perform a control operation to receive azimuth information and motion information of the electronic device 100 from the sensor device 140 and correct an error of an azimuth. For example, the processor 112 may include one or more data processors, an image processor, or a codec. For example, the electronic device 100 may include a data processor, an image processor, or code separately.

The interface 113 may connect several devices (e.g., external memory device 120, camera device 130, sensor device 140, wireless communication device 150, audio device 160, external port device 170, other input/control devices 180, display 190, etc) of the electronic device 100 with the host device 110.

The camera device 130 may record a photo or video clip. The camera device 130 may include a charge coupled device (CCD) or a complementary metal-oxide semiconductor (CMOS) device, etc. Also, the camera device 130 may adjust a change of a hardware-like configuration, for example, lens movement, a number of a diaphragm, etc. according to the camera program executed by the processor 112.

A variety of components of the electronic device 100 may be coupled by one or more communication buses (not written in reference numbers) or stream lines (not written in reference numbers).

The sensor device 140 may include, for example, a geomagnetic sensor and a motion sensor which may sense a magnetic field and motion of the electronic device 100, respectively.

In one example, the geomagnetic sensor may sense a strength and direction of an earth's magnetic field and search a true north direction of an output azimuth. Also, the geomagnetic sensor may sense a change in a magnetic field and detect, for example, an azimuth angle, an azimuth direction, a change amount of an azimuth angle, or/and a change direction of an azimuth direction.

In some examples, the geomagnetic sensor may include a flux-gate geomagnetic sensor which measures a geomagnetic field using a flux-gate. The flux-gate geomagnetic sensor may measure a size and direction of an external magnetic field, for example, by performing a principle for supplying a magnetic field through a driving winding (coil) which winds a magnetic core and measuring a second harmonic frequency component in proportional to the external magnetic field generated according to magnetic saturation and a non-linear magnetic characteristic of the magnetic core, using high permeability materials like permalloy as the magnetic core. The geomagnetic sensor may sense the azimuth information according to this principle.

The motion sensor is one implementation example of sensing motion of the electronic device 100. The motion sensor may include a gyro sensor which senses dynamic force such as for example, acceleration, vibration, and impact and uses inertial force, electric transform, and an application principle of gyro. This gyro sensor may include a sensor using a 2-axis angular system and a 3-axis angular system.

This motion sensor may acquire motion information (e.g., rotation angle, motion acceleration or angular speed) which may determine whether the electronic device 100 is moved. In some examples, in addition, the motion sensor may be variously implemented by combining a gyro sensor and an acceleration sensor.

The wireless communication system 150 may perform wireless communication and include a radio frequency (RF) transceiver and an optical (e.g., infrared) transceiver. The wireless communication device 150 may be designed to operate through one of communication networks, such as for example, a global system for mobile communication (GSM) network, an enhanced data GSM environment (EDGE) network, a code division multiple access (CDMA) network, a W-CDMA network, a long term evolution (LTE) network, an orthogonal frequency division multiple access (OFDMA) network, a wireless fidelity (Wi-Fi) network, a WiMax network, or/and a Bluetooth network.

The audio device 160 may connect to a speaker 161 and a microphone 162 and be responsible for inputting and outputting audio, such as a voice recognition function, a voice copy function, a digital recording function, and a phone call function. For example, the audio device 160 may receive a data signal from the host device 110, convert the received data signal into an electric signal, and output the converted electric signal through the speaker 161.

The speaker 161 may convert a band of the electric signal into an audible frequency band and output the converted signal. The speaker 161 may be disposed in a rear of the electronic device 100, and may include a flexible film speaker in which at least one piezoelectric element is attached to one vibration film.

The microphone 162 may convert sound waves transmitted from people or other sound sources into electric signals. For example, the audio device 160 may receive the electric signal from the microphone 162, convert the received electric signal into an audio data signal, and transmit the converted audio data signal to the host device 110. The audio device 160 may include an earphone, a headphone, or a headset which may be attached and detached to the electronic device 100.

The external port device 170 may connect the electronic device 100 to another electronic device directly or connect it to another electronic device indirectly through a network (e.g., Internet, intranet, a wireless Local Area Network (LAN), etc.). This external port device 170 may include a port part which is disposed in a rear of the electronic device 100.

The display 190 may display signals transmitted from the host device 110 as images such as for example, texts, graphics, or videos. The display 190 may be disposed in a front of the electronic device 100. The display 190 may include a window and a touch panel.

The window may be transparent, be exposed to a front of the electronic device 100, and display images. The touch panel may be a transparent switch panel which is laminated with the window. The display 190 may be implemented as at least one of a Liquid Crystal Display (LCD), an Organic Light Emitting Diode (OLED), a flexible display, and a 3-dimensional display. Also, touch screen technology may be applied to the display 190.

The other input/control devices 180 may include an up/down button for controlling volume. For example, the other input/control devices 180 may include at least one of pointer devices, such as a push button, a locker button, a locker switch, a thumb-wheel, a dial, a stick, and a stylus, each of them having a corresponding function.

The external memory device 120 may include a high-speed random access memory (RAM) such as one or more magnetic storages, a non-volatile memory, one or more optical storages, and/or a flash memory (e.g., a NAND flash memory or a NOR flash memory). The external memory device 120 may store software components. The software components may include an operating system (OS) program, a communication program, a graphic program, a user interface (UI) program, a codec program, a camera program, and one or more application programs. Herein, the term "programs" may be expressed in a set of instructions, an instruction set, or modules.

For example, the OS program means an embedded OS such as Windows, Linux, Darwin, RTXC, UNIX, OS X, or VxWorks. The OS program may include several software components for controlling a general system operation. Control of this general system operation may include memory management and control, storage hardware (device) control and management, power control and management, etc. Also, the OS program may perform a function for smoothly communicating between several hardware components (devices) and software components (programs).

The communication program may communicate with counterpart electronic devices such as a computer, a server, and another electronic device through the wireless communication device 150 or the external port device 170.

The graphic program may include several software components for providing and displaying graphics on the display 190. For example, the term "graphics" means text, web pages, icons, digital images, video, animations, etc.

The UI program may include several software components related to a UI. The UI program may include contents about whether a state of a UI is changed to any state, whether a state of a UI is changed in any condition, etc.

The codec program may include software components related to, for example, encoding and decoding of video files.

The camera program may include a camera-related software component for performing camera-related processes and functions.

The application program may include a browser function, an email function, an instant message function, a word processing function, a keyboard emulation function, an address book function, a touch list function, a widget function, a digital right management (DRM) function, a voice recognition function, a voice copy function, a position determining function, or a location based service function, etc.

The host device 110 may further include programs (instructions) in addition to the programs. Also, various functions of the electronic device 100 according to various embodiments of the present invention may include one or more processing, hardware including an application specific integrated circuit (ASIC), and/or software.

In various examples, electronic device may include a geomagnetic sensor, a motion sensor, and a processor configured to identify, at the electronic device, a change value of an azimuth, and determine reliability of the change value, and sense motion of the electronic device based on the reliability, and correcting the azimuth according to the motion.

In various embodiments, the processor may acquire a change of an angle or a direction corresponding to the azimuth as the change value.

In various embodiments, the processor may acquire difference between an initial angle and a later angle corresponding to the azimuth as the change value.

In various embodiments, the processor may acquire at least one of a clockwise or counterclockwise direction in which a later direction of the azimuth is rotated based on an initial direction of the azimuth as the change value.

In various embodiments, the processor may determine whether the change value corresponds to a specified value.

In various embodiments, the processor may determine that the reliability is a first reliability based on a determination that the change value is greater than or equal to a specified value and determining that the reliability is a second reliability based on a determination that the change value is less than or equal to a specified value.

In various embodiments, the motion may include rotation information.

In various embodiments, the processor may amend the azimuth based on rotation angle of the motion.

In various examples, the motion sensor may include a gyro sensor or an acceleration sensor.

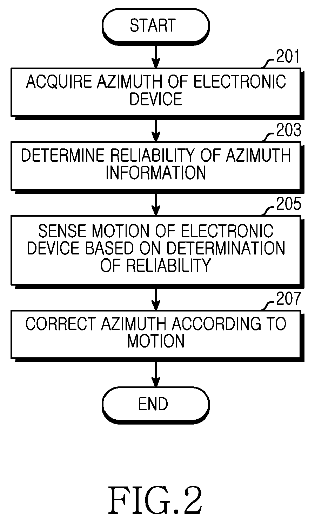

FIG. 2 is a flowchart illustrating an azimuth correction method according to one embodiment of the present invention.

Referring to FIGs. 1 and 2, in operation 201, the electronic device 100 may acquire an azimuth. Herein, the azimuth may include, for example, an azimuth angle or/and an azimuth direction which is/are sensed by a geomagnetic sensor included in the electronic device 100.

In one example, the geomagnetic sensor may sense a strength and direction of an earth's magnetic field and search a true north direction of an output azimuth. In one example, the geomagnetic sensor may sense a change in a magnetic field and detect an azimuth angle, an azimuth direction, a change amount of an azimuth angle, or/and a change direction of an azimuth direction. For example, azimuth information may be acquired by the processor 112.

The electronic device 100 may be at least one of apparatuses such as a mobile phone, a mobile pad, a media player, a tablet computer, a handheld computer, or a PDA. For example, the electronic device 100 may be a certain electronic device which includes a device in which two or more functions are combined among these apparatuses.

In operation 203, the electronic device 100 may determine reliability of the azimuth information. In accordance with one embodiment of the present invention, the reliability of the azimuth information may be determined by a change value of the azimuth. For example, the electronic device 100 may determine whether the change value of the azimuth corresponding to a specified value (e.g., greater than 10 degree). Herein, the "change value of the azimuth" may include, for example, the change amount of the azimuth angle or/and the change direction of the azimuth direction.

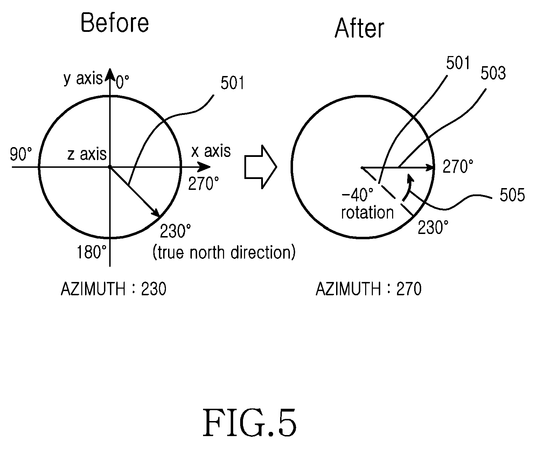

For example, the change amount of the azimuth angle may be defined as difference (e.g., a totally changed value) between an initial value and a later value of the azimuth angle. The change direction of the azimuth direction may be defined as for example, a clockwise or counterclockwise direction in which a later direction of the azimuth is rotated based on an initial direction of the azimuth. For example, the clockwise or counterclockwise direction may be expressed as, as shown in FIG. 5, a positive or negative number. For example, the specified value may be an angle corresponding to the change value of the azimuth. For example, the operation of step 203 may be controlled by the processor 112.

In accordance with one embodiment of the present invention, the electronic device 100 may determine reliability of azimuth information based on recognition of its position. For example, when the electronic device 100 determines that it is located in the interior of a building, it may not rely on azimuth information because a magnetic field around the electronic device 100 may be distorted. A location of the electronic device 100 may be sensed by various location measurement methods using a wireless LAN and a global positioning system (GPS).

In operation 205, the electronic device 100 may sense its motion based on the determination of the reliability. Herein, the "motion" may mean information (e.g., a rotation angle, motion angular speed or acceleration) which may determine whether the electronic device 100 is moved. For example, the sensor device 140 may be one example of a motion sensor which may sense a rotation angle, motion angular speed or acceleration of the electronic device 100. The sensor device 140 may include a gyro sensor which senses dynamic force such as acceleration, vibration, or impact and uses, for example, inertial force, electric transform, or an application principle of gyro.

Also, the motion sensor may be variously implemented by combining a gyro sensor and an acceleration sensor. Motion information acquired by this motion sensor may be provided to, for example, the processor 112.

In operation 207, the electronic device 100 may correct the azimuth angle according to the motion. For example, in case of a rotation angle in the motion information, the electronic device 100 may correct the azimuth according to a change amount of a rotation angle magnitude or a change direction corresponding to a rotation direction. If a change direction of the azimuth direction is a clockwise direction when there is no change in a magnetic field, the change direction corresponding to the rotation of the electronic device 100 is a counterclockwise direction.

For example, when the change direction of the rotation of the electronic device 100 is the same direction as the change direction of the azimuth direction or when the change directions are opposite from each other and difference between the change amount of the rotation angle magnitude and a change amount of an azimuth angle is corresponding to a specified value(e.g., the change amount is greater than or equal to a specified value(e.g., 10degree)), the azimuth may be corrected by the change amount of the rotation angle magnitude. That is, the electronic device 100 may perform an operation for recognizing a change in a magnetic field around it. For example, this operation may be controlled by the processor 112.

In some embodiments of the present invention, the electronic device 100 may sense a change in a magnetic field. If difference between the change amount of the azimuth angle and the change amount of the rotation angle magnitude is corresponding to a specified value (e.g., the change amount is greater than or equal to a specified value (e.g., 10 degree)) the electronic device 100 may perform an operation for determining it as an error and sensing the change of the magnetic field.

For example, an instruction set for each of these operations may be stored as one or more modules in the memory. For example, In this case, the modules stored in the memory may be executed by the one or more processors 112.

Prior to describing another embodiment of the present invention later, because there are many similar portions between description described later and description described above, some of detailed description may be omitted. Accordingly, the description described later must be understood by giving attention to this point.

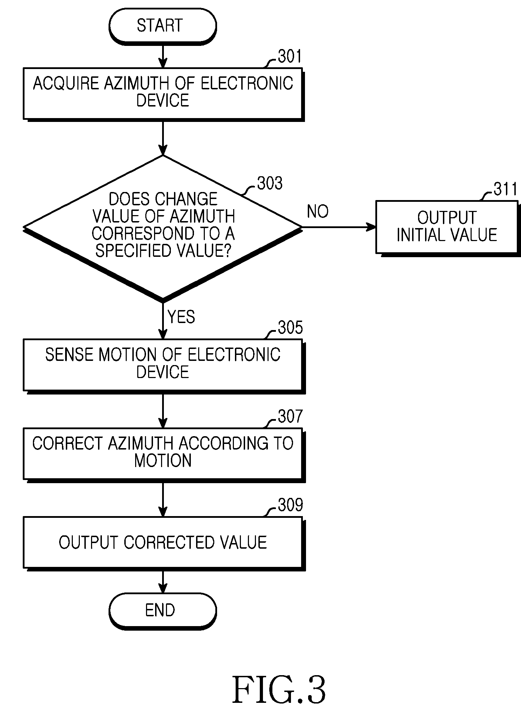

FIG. 3 is a flowchart illustrating an azimuth correction method according to one embodiment of the present invention.

Referring to FIGs. 1 and 3, in operation 301, the electronic device 100 may acquire its azimuth. The description for the operation for acquiring the azimuth is described above.

In operation 303, the electronic device 100 may determine whether a change value of the azimuth corresponds to a specified value (e.g., a change value is greater than a reference value (e.g., 10 degree)).

In one embodiment, When the change value of the azimuth corresponds to another specified value (e.g., a change value is less than or equal to another reference value (e.g., a 10 degree)), the electronic device 100 may output an initial value (operation 311). For example, when the change value of the azimuth is less than or equal to the reference value, the electronic device 100 may recognize it as an error and return to an initial state. In some examples, the initial value may mean an initial azimuth sensed by a geomagnetic sensor. For example, this process of operation 311 may be controlled by the processor 112.

In step 305, the electronic device 100 may sense its motion. For example, the electronic device 100 may sense motion related information (e.g., a rotation angle, motion angular speed or motion acceleration) using a motion sensor. For example, the acquired motion information may be provided to the processor 112.

In operation 307, the electronic device 100 may correct the azimuth according to the motion. For example, in case of a rotation angle of the electronic device 100 in the motion information, the electronic device 100 may correct the azimuth according to a change amount of a rotation angle magnitude or a change direction corresponding to a rotation of the electronic device 100.

If a change direction of an azimuth direction is a clockwise direction when there is no change in a magnetic field, this principle may be performed because the change direction of the rotation angle direction of the electronic device 100 is a counterclockwise direction.

In one embodiment, when the change direction of the rotation angle direction of the electronic device 100 is the same direction as the change direction of the azimuth direction or when the change directions are opposite from each other and difference between the change amount of the rotation angle magnitude and a change amount of an azimuth angle is less than or equal to a threshold value, the azimuth may be corrected by the change amount of the rotation angle magnitude. This process of step 307 may be controlled by the processor 112.

In operation 309, the electronic device 100 may output the corrected value. For example, the electronic device 100 may output the value, in which the azimuth is corrected as, voice, text, or image data.

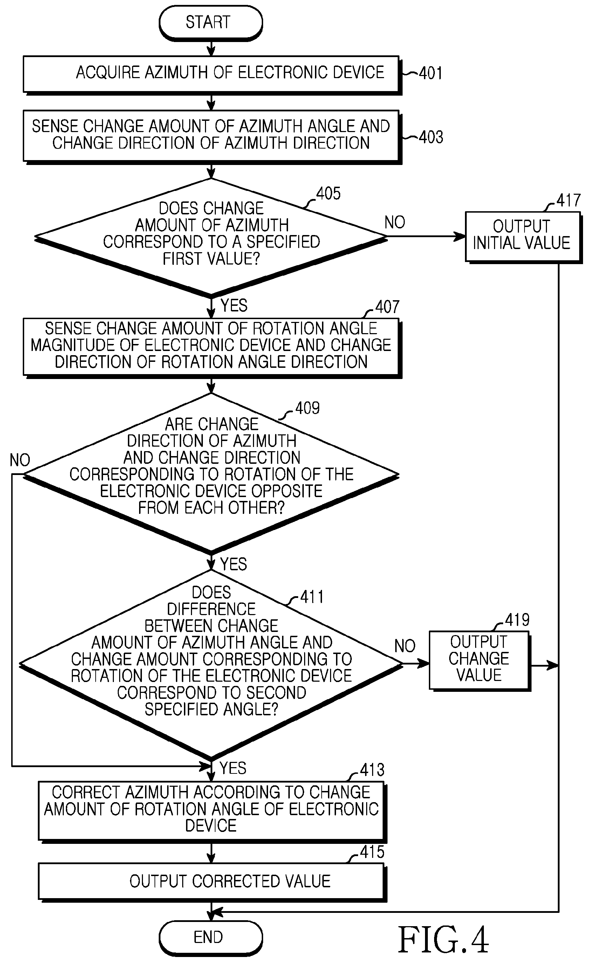

FIG. 4 is a flowchart illustrating an azimuth correction method according to one embodiment of the present invention.

Referring to FIGs. 1 and 4, in operation 401, the electronic device 100 may acquire its azimuth. The description for the operation for acquiring the azimuth is described above.

In operation 403, the electronic device 100 may sense a change amount of an azimuth angle and a change direction of an azimuth direction. The change amount of the azimuth angle may be defined as, for example, difference (e.g., a totally changed value) between an initial value and a later value of the azimuth angle. For example, the change direction of the azimuth direction may be defined as a clockwise or counterclockwise direction in which a later direction of the azimuth rotates based on an initial direction of the azimuth. For example, the clockwise or counterclockwise direction may be expressed as, as shown in FIG. 5, a positive or negative number.

In operation 405, the electronic device 100 may determine whether the change value of the azimuth corresponds to a specified first value (e.g., a change value is greater than a reference value (e.g., 10 degree)). The specified first value may be stored in the memory of the electronic device 100 and be an angle corresponding to the azimuth.

In one embodiment, When the change amount of the azimuth corresponds to specified first value (e.g., a change value is less than or equal to the specified first reference value (e.g., a 10 degree), the electronic device 100 may output an initial value of the azimuth (operation 417). In some examples, the initial value may mean an initial azimuth sensed by a geomagnetic sensor. For example, this process of operation 417 may be controlled by the processor 112.

In step 407, the electronic device 100 may sense a change amount of a rotation angle magnitude and a change direction of a rotation angle direction. For example, a motion sensor is one implementation example of sensing a rotation angle in the motion information. The motion sensor may include a gyro sensor which senses dynamic force such as acceleration, vibration, or impact and uses inertial force, electric transform, or an application principle of gyro. Also, the motion sensor may sense rotation angle information by combining a gyro sensor and an acceleration sensor.

In operation 409, the electronic device 100 may verify whether the change direction of the azimuth direction and the change direction corresponding to a rotation of the electronic device 100 are opposite from each other. For example, if the change direction of the azimuth direction is a clockwise direction when there is no change in a magnetic field, the change direction corresponding to a rotation of the electronic device 100 is a counterclockwise direction.

For example, when the change direction of the azimuth direction and the change direction corresponding to a rotation of the electronic device 100 are not opposite from each other, the electronic device 100 may recognize it as an error and correct the azimuth according to the change amount of the rotation angle magnitude (operation 413).

In operation 411, the electronic device 100 may determine whether difference between the change amount of the azimuth angle and the change amount corresponding to a rotation of the electronic device 100 corresponds to a second specified angle(e.g., the change amount is greater than a second specified reference angle). For example, the second specified angle may be stored in the memory of the electronic device 100.

For example, when the difference between the change amount of the azimuth angle and the change amount of the rotation angle of the electronic device 100 is less than or equal to the predetermined second specified angle, the electronic device 100 may recognize it as a normal state and output a change value of the azimuth (operation 419). Herein, for example, the change value means an azimuth value changed by the geomagnetic sensor. For example, this process of the operation 411 may be controlled by the processor 112.

In operation 413, the electronic device 100 may correct the azimuth according to the change amount of the rotation angle of the electronica device 100. For example, when the change amount of the rotation angle is x, the processor 112 may correct the azimuth by adding -x to the azimuth.

In operation 415, the electronic device 100 may output the corrected value. For example, the electronic device 100 may output the value, in which the azimuth is corrected, as voice, text, or image data.

In various examples, an azimuth correction method may include identifying, at an electronic device, a change value of an azimuth, determining reliability of the change value, sensing motion of the electronic device based on the reliability, and correcting the azimuth according to the motion. In various embodiments, the method may further comprise outputting information corresponding to the corrected azimuth.

In various embodiments, the outputting may comprise presenting at least one of voice, text or image as the information.

In various embodiments, the identifying may comprise acquiring a change of an angle or a direction corresponding to the azimuth as the change value.

In various embodiments, the identifying may comprise acquiring difference between an initial angle and a later angle corresponding to the azimuth as the change value.

In various embodiments, the identifying may comprise acquiring at least one of a clockwise or counterclockwise direction in which a later direction of the azimuth is rotated based on an initial direction of the azimuth as the change value.

In various embodiments, the determining may comprise determining whether the change value corresponds to a specified value.

In various embodiments, the determining may comprise determining that the reliability is a first reliability based on a determination that the change value is greater than or equal to a specified value and determining that the reliability is a second reliability based on a determination that the change value is less than or equal to a specified value.

In various embodiments, the motion may include rotation information.

In various embodiments, the correcting may comprise amending the azimuth based on rotation angle of the motion.

FIG. 5 illustrates a change in an azimuth of a geomagnetic sensor according to one embodiment of the present invention.

Referring to FIGs. 1 and 5, a geomagnetic sensor of the electronic device 100 may sense a magnetic field and indicate an azimuth. The geomagnetic sensor of the electronic device 100 may verify a change in the magnetic field. As shown in FIG. 5, for example, in a state where the electronic device 100 is stopped, the geomagnetic sensor may indicate 230° which is an initial value 501 of an azimuth before the magnetic field is changed. A change value 503 of an azimuth after the magnetic field is changed may indicate 270° in which 230° is moved to -40°.

For example, an x axis is a reference line of a horizontal direction based on the electronic device 100. A y axis is a reference line of a vertical direction based on the electronic device 100. For example, movement in a clockwise direction of the azimuth may be expressed as a positive number and movement in a counterclockwise direction may be expressed as a negative number, based on a z axis which means a height direction. The initial value 501 may indicate a true north direction.

A change in the azimuth may be an error, for example, by a change in a magnetic field around the electronic device 100 or be generated by motion of the electronic device 100. That is, if a change direction of an azimuth direction is a clockwise direction when there is no change in a magnetic field, a rotation direction of the electronic device 100 is a counterclockwise direction.

In one example, when a change amount 505 of an azimuth magnitude is less than a specified reference value, the electronic device 100 may output the initial value 501 without correcting an azimuth. For example, if the reference value is 20°, the change amount 505 of the azimuth magnitude, which is shown in FIG. 5, may be corrected because it is 40°. However, if the change amount 505 of the azimuth magnitude is less than or equal to 20°, for example, when the change amount 503 of the azimuth is 240°, the electronic device 100 may output 230°which the initial value 501 before the magnetic field is changed. This reference value may be stored in the internal memory 111 or/and the external memory device 120.

A detailed description will be given for an azimuth correction method of the electronic device 100 of FIG. 5 according to motion of the electronic device 100.

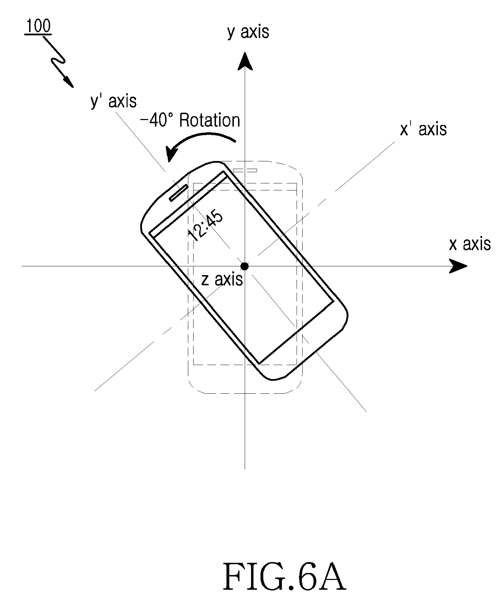

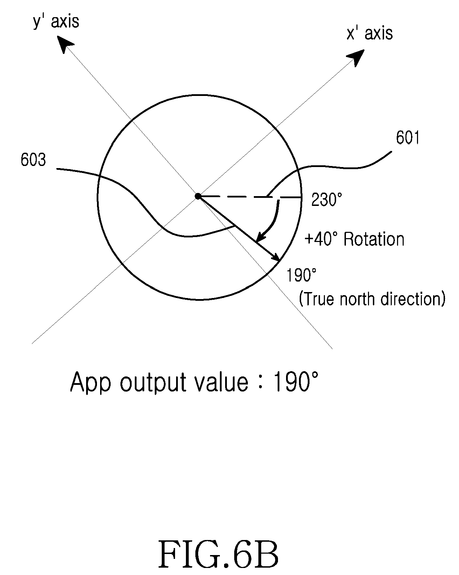

FIGs. 6A and 6B illustrate an azimuth correction method of an electronic device according to one embodiment of the present invention.

Referring to FIGs. 1, 6A, and 6B, as shown in FIG. 5, in a state where an azimuth of a geomagnetic sensor is moved to 40° in a counterclockwise direction, the electronic device 100 is rotated at 40° in the counterclockwise direction based on a z axis. Rotation angle information (e.g., an rotation angle magnitude and direction) about this rotation may be measured by a gyro sensor or an acceleration sensor and combination of the gyro sensor and the acceleration sensor. For example, an x axis may be a reference line of a horizontal direction for the electronic device 100 before the electronic device 100 is rotated. A y axis may be a reference line of a vertical direction for the electronic device 100 before the electronic device 100 is rotated. Also, an x' axis and a y' axis are reference lines of horizontal and vertical directions after the electronic device 100 is rotated.

In one embodiment, because the rotation direction (counterclockwise direction) of the electronic device 100 and the direction (counterclockwise direction) in which the azimuth is moved are identical to each other, the electronic device 100 may determine it as an error and correct an initial value 601. That is, the electronic device 100 may output 190° which is a correction value 603 in which 40°is moved in the clockwise direction from the initial value 601 of the azimuth by 40° which is the angle rotated in the counterclockwise direction. In one example, the electronic device 100 may recognize a change in a magnetic field and display a true north direction. This operation may be controlled by the processor 112.

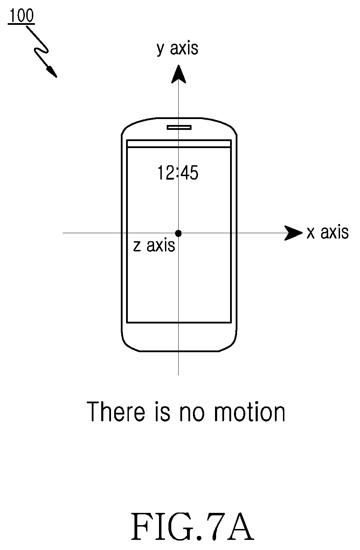

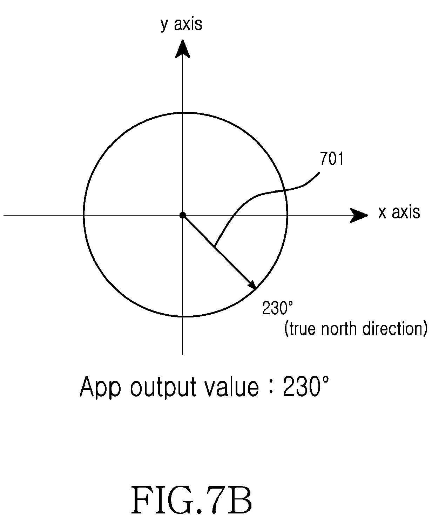

FIGs. 7A and 7B illustrate an azimuth correction method of an electronic device according to one embodiment of the present invention.

Referring to FIGs. 1, 7A, and 7B, as shown in FIG. 5, in a state where an azimuth of a geomagnetic sensor is moved to 40° in a counterclockwise direction, there is no motion of the electronic device 100. In this case, as described above, although the azimuth of the electronic device 100 is changed, because there is no motion of the electronic device 100, the electronic device 100 may determine it as an error and output 230° which is an initial value 701.

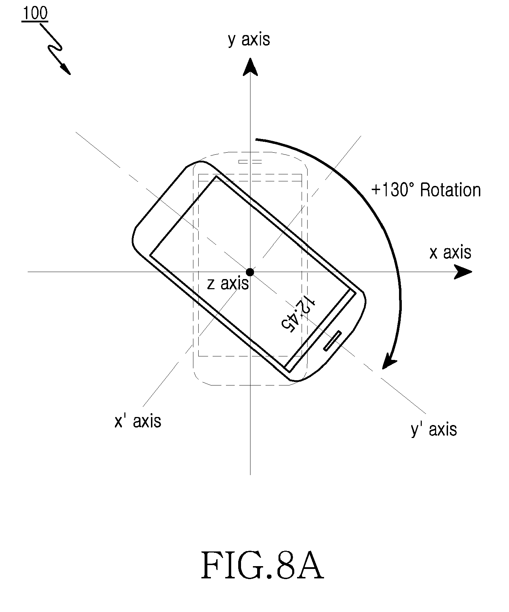

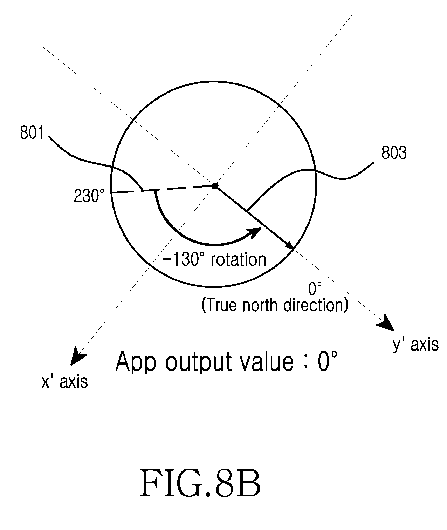

FIGs. 8A and 8B illustrate an azimuth correction method of an electronic device according to one embodiment of the present invention.

Referring to FIGs. 1, 8A, and 8B, as shown in FIG. 5, in a state where an azimuth of a geomagnetic sensor is moved to 40° in a counterclockwise direction, the electronic device 100 is rotated at 130° in a clockwise direction based on a z axis. Rotation angle information (e.g., an rotation angle magnitude and direction) about this rotation may be measured by a gyro sensor or an acceleration sensor and combination of the gyro sensor and the acceleration sensor. For example, an x axis may be a reference line of a horizontal direction for the electronic device 100 before the electronic device 100 is rotated. A y axis may be a reference line of a vertical direction for the electronic device 100 before the electronic device 100 is rotated. Also, an x' axis and a y' axis are reference lines of horizontal and vertical directions after the electronic device 100 is rotated.

In this case, because the rotation direction (clockwise direction) of the electronic device 100 and the direction (counterclockwise direction) in which the azimuth is moved are opposite to each other, a change amount of an rotation angle magnitude of the electronic device 100 is greater than a reference value (e.g., 20°), the electronic device 100 may determine it as an error and correct an initial value 801. That is, the electronic device 100 may output 0° which is a correction value 803 in which 130°is moved in the counterclockwise direction from the initial value 801 of the azimuth by 130° which is the angle rotated in the clockwise direction

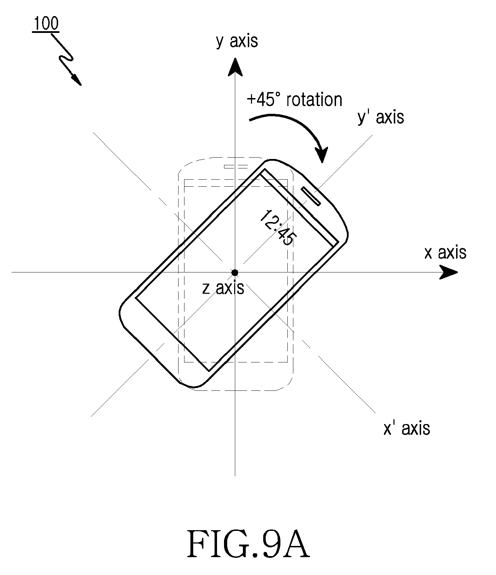

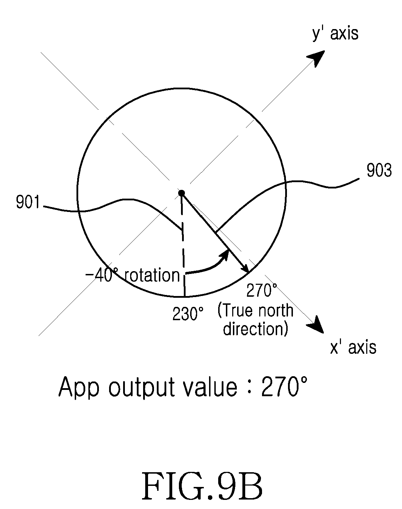

FIGs. 9A and 9B illustrate an azimuth correction method of an electronic device according to one embodiment of the present invention.

Referring to FIGs. 1, 9A, and 9B, as shown in FIG. 5, in a state where an azimuth of a geomagnetic sensor is moved to 40° in a counterclockwise direction, the electronic device 100 is rotated at 45° in the clockwise direction based on a z axis. In one example, rotation angle information (e.g., an rotation angle magnitude and direction) about this rotation may be measured by a gyro sensor or an acceleration sensor and combination of the gyro sensor and the acceleration sensor. For example, an x axis may be a reference line of a horizontal direction for the electronic device 100 before the electronic device 100 is rotated. A y axis may be a reference line of a vertical direction for the electronic device 100 before the electronic device 100 is rotated. Also, an x' axis and a y' axis are reference lines of horizontal and vertical directions after the electronic device 100 is rotated.

In this case, because the rotation direction (clockwise direction) of the electronic device 100 and the direction (counterclockwise direction) in which the azimuth is moved are opposite to each other and difference (5°) between a change amount (45°) of an rotation angle magnitude and a change amount (40°) of an azimuth angle is less than a reference value (e.g., 10°), the electronic device 100 may determine it as a normal state and output 270° which is a change value 903 moved from an initial value 901.

Also, an instruction set for each of these operations may be stored as one or more modules in the memory of the electronic device 100. In this case, the modules stored in the memory may be executed by the one or more processors 112.

In accordance with various examples, the electronic device may improve the reliability for the direction guide function service by correcting the error of the azimuth using the motion sensor

Various methods according to claims of the present invention and/or embodiments described in the specification of the present invention may be implemented as hardware, software, or combinational type of the hardware and the software. When the method is implemented by the software, a computer-readable storage medium for storing one or more programs (software modules) may be provided. The one or more programs stored in the computer-readable storage medium may be executed by the one or more processors 112 in the electronic device 100. The one or more programs include instructions for allowing the electronic device 100 to execute the methods according to the claims of the present invention and/or the embodiments described in the specification of the present invention.

These programs (software module, software) may be stored in a RAM, a non-volatile memory including a flash memory, a Read Only Memory (ROM), an Electrically Erasable Programmable ROM (EEPROM), a magnetic disc storage device, a Compact Disc-ROM (CD-ROM), a Digital Versatile Disc (DVD) or an optical storage device of a different type, or a magnetic cassette. Or, the programs may be stored in a memory configured by combination of some or all of them. Also, the configured memory may include a plurality of memories.

Also, the programs may stored in an attachable storage device which may access an electronic device through each of communication networks such as the Internet, an intranet, a LAN, a Wireless LAN (WLAN), or a Storage Area Network (SAN) or a communication network configured by combination of them. This storage device may connect to the electronic device through an external port.

Also, a separate storage device on a communication network may connect to a portable electronic device.

While the present invention has been particularly shown and described with reference to various embodiments thereof, it will be understood by those skilled in the art that various changes in form and details may be made therein without departing from the scope of the present invention as defined by the appended claims.

## Claims

1. A method comprising:
identifying, at a mobile phone (100) having a geomagnetic sensor and a motion sensor, a change value of an azimuth, the azimuth being sensed by the geomagnetic sensor (operation 201; 301; 401);
determining reliability of the change value (operation 203) by comparing the change value to a specified value (operation 303;405) or by determining the location of the mobile phone;
when the change value has been determined unreliable, sensing motion of the mobile phone (operation 205; 305; 407) with the motion sensor; and
correcting the azimuth according to the motion (operation 207; 307; 413).

2. The method of claim 1, further comprising outputting information corresponding to the corrected azimuth.

3. The method of claim 2, wherein the outputting comprises presenting at least one of voice, text or image as the information.

4. The method of claim 1, wherein the identifying comprises acquiring a change of an angle or a direction corresponding to the azimuth as the change value.

5. The method of claim 1, wherein the identifying comprises acquiring difference between an initial angle and a later angle corresponding to the azimuth as the change value.

6. The method of claim 1, wherein the identifying comprises acquiring at least one of a clockwise or counterclockwise direction in which a later direction of the azimuth is rotated based on an initial direction of the azimuth as the change value.

7. The method of claim 1, wherein the determining comprises determining whether the change value corresponds to a specified value.

8. The method of claim 1, wherein the determining comprises determining that the reliability is a first reliability based on a determination that the change value is greater than or equal to a specified value and determining that the reliability is a second reliability based on a determination that the change value is less than or equal to a specified value.

9. The method of claim 1, wherein the motion includes rotation information.

10. The method of claim 1, wherein the correcting comprises amending the azimuth based on rotation angle of the motion.

11. A mobile phone (100) comprising:
a geomagnetic sensor;
a motion sensor; and
a processor (112) configured to:
identify, at the mobile phone, a change value of an azimuth, the azimuth being sensed by the geomagnetic sensor,
determine reliability of the change value by comparing the change value to a specified value or by determining the location of the electronic device,
sense motion of the mobile phone with the motion sensor when the change value has been determined unreliable, and
correcting the azimuth according to the motion.

12. The device of claim 11, wherein the processor (112) acquires a change of an angle or a direction corresponding to the azimuth as the change value.

13. The device of claim 11, wherein the processor (112) acquires difference between an initial angle and a later angle corresponding to the azimuth as the change value.

14. The device of claim 11, wherein the processor (112) acquires at least one of a clockwise or counterclockwise direction in which a later direction of the azimuth is rotated based on an initial direction of the azimuth as the change value.

15. A non-transitory computer-readable storage medium encoded with computer-executable instructions that when executed cause a data processing system to perform the steps of:
identifying, at a mobile phone having a geomagnetic sensor and a motion sensor, a change value of an azimuth, the azimuth being sensed by the geomagnetic sensor;
determining reliability of the change value by comparing the change value to a specified value or by determining the location of the mobile phone;
sensing motion of the mobile phone with the motion sensor when the change value has been determined unreliable; and
correcting the azimuth according to the motion.

## Patentansprüche

1. Verfahren, das Folgendes beinhaltet:
Identifizieren, an einem Mobiltelefon (100) mit einem geomagnetischen Sensor und einem Bewegungssensor, eines Änderungswerts eines Azimuts, wobei der Azimut von dem geomagnetischen Sensor erfasst wird (Schritt 201; 301; 401);
Feststellen der Zuverlässigkeit des Änderungswerts (Schritt 203) durch Vergleichen des Änderungswerts mit einem vorgegebenen Wert (Schritt 303;405) oder durch Feststellen des Standorts des Mobiltelefons;
Erfassen, wenn der Änderungswert als unzuverlässig festgestellt wurde, der Bewegung des Mobiltelefons (Schritt 205; 305; 407) mit dem Bewegungssensor; und Korrigieren des Azimuts gemäß der Bewegung (Schritt 207; 307; 413).

2. Verfahren nach Anspruch 1, das ferner das Ausgeben von Informationen entsprechend dem korrigierten Azimut beinhaltet.

3. Verfahren nach Anspruch 2, wobei das Ausgeben das Präsentieren von Sprache, Text und/oder Bild als Informationen beinhaltet.

4. Verfahren nach Anspruch 1, wobei das Identifizieren das Erfassen einer Änderung eines Winkels oder einer Richtung entsprechend dem Azimut als Änderungswert beinhaltet.

5. Verfahren nach Anspruch 1, wobei das Identifizieren das Erfassen einer Differenz zwischen einem Anfangswinkel und einem späteren Winkel entsprechend dem Azimut als Änderungswert beinhaltet.

6. Verfahren nach Anspruch 1, wobei das Identifizieren das Erfassen einer Rechts- und/oder Linksdrehrichtung, in der eine spätere Richtung des Azimuts auf der Basis einer Anfangsrichtung des Azimuts gedreht wird, als Änderungswert beinhaltet.

7. Verfahren nach Anspruch 1, wobei das Feststellen das Feststellen beinhaltet, ob der Änderungswert einem vorgegebenen Wert entspricht.

8. Verfahren nach Anspruch 1, wobei das Feststellen das Feststellen beinhaltet, dass die Zuverlässigkeit eine erste Zuverlässigkeit ist, auf der Basis einer Feststellung, dass der Änderungswert gleich oder größer als ein vorgegebener Wert ist, und das Feststellen, dass die Zuverlässigkeit eine zweite Zuverlässigkeit ist, auf der Basis einer Feststellung, dass der Änderungswert gleich oder kleiner als ein vorgegebener Wert ist.

9. Verfahren nach Anspruch 1, wobei die Bewegung Rotationsinformationen beinhaltet.

10. Verfahren nach Anspruch 1, wobei das Korrigieren das Ändern des Azimuts auf der Basis des Rotationswinkels der Bewegung beinhaltet.

11. Mobiltelefon (100), das Folgendes umfasst:
einen geomagnetischen Sensor;
einen Bewegungssensor; und
einen Prozessor (112), konfiguriert zum:
Identifizieren, an dem Mobiltelefon, eines Änderungswerts eines Azimuts, wobei der Azimut von dem geomagnetischen Sensor erfasst wird,
Feststellen der Zuverlässigkeit des Änderungswerts durch Vergleichen des Änderungswerts mit einem vorgegebenen Wert oder durch Feststellen des Standorts des elektronischen Geräts,
Erfassen der Bewegung des Mobiltelefons mit dem Bewegungssensor, wenn der Änderungswert als unzuverlässig festgestellt wurde, und
Korrigieren des Azimuts gemäß der Bewegung.

12. Vorrichtung nach Anspruch 11, wobei der Prozessor (112) eine Änderung eines Winkels oder einer Richtung entsprechend dem Azimut als Änderungswert erfasst.

13. Vorrichtung nach Anspruch 11, wobei der Prozessor (112) eine Differenz zwischen einem Anfangswinkel und einem späteren Winkel entsprechend dem Azimut als Änderungswert erfasst.

14. Vorrichtung nach Anspruch 11, wobei der Prozessor (112) eine Rechts- und/oder eine Linksdrehrichtung, in der eine spätere Richtung des Azimuts auf der Basis einer Anfangsrichtung des Azimuts gedreht wird, als Änderungswert erfasst.

15. Nichtflüchtiges computerlesbares Speichermedium, mit Computer-ausführbaren Befehlen codiert, die bei Ausführung bewirken, dass ein Datenverarbeitungssystem die folgenden Schritte ausführt:
Identifizieren, an einem Mobiltelefon mit einem geomagnetischen Sensor und einem Bewegungssensor, eines Änderungswerts eines Azimuts, wobei der Azimut von dem geomagnetischen Sensor erfasst wird;
Feststellen der Zuverlässigkeit des Änderungswerts durch Vergleichen des Änderungswertes mit einem vorgegebenen Wert oder durch Feststellen des Standorts des Mobiltelefons;
Erfassen einer Bewegung des Mobiltelefons mit dem Bewegungssensor, wenn der Änderungswert als unzuverlässig festgestellt wurde; und
Korrigieren des Azimuts gemäß der Bewegung.

## Revendications

1. Procédé comprenant les opérations consistant à :
identifier, au niveau d'un téléphone portable (100) possédant un capteur géomagnétique et un capteur de mouvement, une valeur de changement pour un azimut, l'azimut étant détecté par le capteur géomagnétique (opération 201 ; 301 ; 401) ;
déterminer la fiabilité de la valeur de changement (opération 203) grâce à la comparaison de la valeur de changement avec une valeur spécifiée (opération 303 ; 405) ou grâce à la détermination de la localisation du téléphone portable ;
lorsqu'il a été déterminé que la valeur de changement n'est pas fiable, détecter un mouvement du téléphone portable (opération 205 ; 305 ; 407) à l'aide du capteur de mouvement ; et
corriger l'azimut en fonction du mouvement (opération 207 ; 307 ; 413).

2. Procédé selon la revendication 1, comprenant en outre la fourniture d'informations lesquelles correspondent à l'azimut corrigé.

3. Procédé selon la revendication 2, la fourniture comprenant la présentation d'au moins un des éléments suivants, à savoir une voix, un texte ou une image, à titre d'informations.

4. Procédé selon la revendication 1, l'identification comprenant l'acquisition d'un changement pour un angle ou un sens correspondant à l'azimut, comme étant la valeur de changement.

5. Procédé selon la revendication 1, l'identification comprenant l'acquisition d'une différence entre un angle initial et un angle ultérieur, lequel correspond à l'azimut, comme étant la valeur de changement.

6. Procédé selon la revendication 1, l'identification comprenant l'acquisition d'au moins un sens, soit le sens horaire soit le sens anti-horaire, suivant lequel un sens ultérieur de l'azimut sera tourné sur la base d'un sens initial de l'azimut, comme étant la valeur de changement.

7. Procédé selon la revendication 1, la détermination comprenant la détermination pour savoir si la valeur de changement correspond ou non à une valeur spécifiée.

8. Procédé selon la revendication 1, la détermination comprenant les opérations consistant à déterminer que la fiabilité est une première fiabilité fondée sur une détermination que la valeur de changement est supérieure ou égale à une valeur spécifiée, et à déterminer que la fiabilité est une deuxième fiabilité fondée sur une détermination que la valeur de changement est inférieure ou égale à une valeur spécifiée.

9. Procédé selon la revendication 1, le mouvement incluant des informations relatives à la rotation.

10. Procédé selon la revendication 1, la correction comprenant la modification de l'azimut sur la base de l'angle de rotation du mouvement.

11. Téléphone portable (100) comprenant :
un capteur géomagnétique ;
un capteur de mouvement ; et
un processeur (112) configuré de façon à :
identifier, au niveau du téléphone portable, une valeur de changement pour un azimut, l'azimut étant détecté par le capteur géomagnétique,
déterminer la fiabilité de la valeur de changement grâce à la comparaison de la valeur de changement avec une valeur spécifiée ou grâce à la détermination de la localisation du dispositif électronique,
détecter un mouvement du téléphone portable à l'aide du capteur de mouvement lorsqu'il a été déterminé que la valeur de changement n'est pas fiable, et
corriger l'azimut en fonction du mouvement.

12. Dispositif selon la revendication 11, le processeur (112) effectuant l'acquisition d'un changement pour un angle ou un sens correspondant à l'azimut, comme étant la valeur de changement.

13. Dispositif selon la revendication 11, le processeur (112) effectuant l'acquisition d'une différence entre un angle initial et un angle ultérieur, lequel correspond à l'azimut, comme étant la valeur de changement.

14. Dispositif selon la revendication 11, le processeur (112) effectuant l'acquisition d'au moins un sens, soit le sens horaire soit le sens anti-horaire, suivant lequel un sens ultérieur de l'azimut sera tourné sur la base d'un sens initial de l'azimut, comme étant la valeur de changement.

15. Support de stockage non transitoire, lisible par ordinateur, codé avec des instructions exécutables par ordinateur qui, lors de leur exécution, obligent un système de traitement de données à réaliser les étapes consistant à :
identifier, au niveau d'un téléphone portable possédant un capteur géomagnétique et un capteur de mouvement, une valeur de changement pour un azimut, l'azimut étant détecté par le capteur géomagnétique ;
déterminer la fiabilité de la valeur de changement grâce à la comparaison de la valeur de changement avec une valeur spécifiée ou grâce à la détermination de la localisation du téléphone portable ;
détecter un mouvement du téléphone portable à l'aide du capteur de mouvement lorsqu'il a été déterminé que la valeur de changement n'est pas fiable ; et
corriger l'azimut en fonction du mouvement.
